# EUROPÄISCHE PATENTSCHRIFT

(11) **EP 3 849 687 B1**
(45) Veröffentlichungstag und Bekanntmachung des Hinweises auf die Patenterteilung: **04.06.2025**
(21) Anmeldenummer: 19804698.9
(22) Anmeldetag: 12.11.2019
(51) Int. Cl.: B01D 29/15, B01D 35/027, B01D 29/96, B01D 35/147

(54) **FILTERVORRICHTUNG**
FILTER DEVICE
DISPOSITIF DE FILTRATION

(30) Priorität: 23.11.2018 DE 102018009187
(43) Veröffentlichungstag der Anmeldung: 21.07.2021
(73) Patentinhaber: Hydac Filtertechnik GmbH, 66280 Sulzbach/Saar (DE)
(72) Erfinder: KLEIN, Volkmar, 66482 Zweibrücken (DE); HENNES, Stefan, 66540 Neunkirchen (DE)
(74) Vertreter: Bartels und Partner, Patentanwälte
(86) Internationale Anmeldenummer: PCT/EP2019/081063
(87) Internationale Veröffentlichungsnummer: WO 2020/104260

(56) Entgegenhaltungen:
- DE-A1- 102009 049 868
- DE-A1- 102014 211 799
- DE-A1- 102015 007 692

## Beschreibung

Die Erfindung betrifft eine Filtervorrichtung mit einem Filtergehäuse und einem darin aufgenommenen Filterelement, dessen Elementmaterial sich zur Filtrierung einer Flüssigkeit zwischen zwei Endkappen erstreckt, von denen zumindest eine Endkappe an einer Elementaufnahme gelagert ist, wobei mittels einer mehr als einen Freiheitsgrad zur Verfügung stellenden Lagerung das Filterelement über seine eine Endkappe gelenkig an der Elementaufnahme gelagert ist.

Filtervorrichtungen sind im Stand der Technik bekannt, vgl. beispielsweise DE 101 42 774 A1. Bei solchen Filtervorrichtungen, bei denen, wie bei dem erwähnten Dokument, Elementaufnahmen in formschlüssiger Verbindung mit Gehäuseteilen, wie Gehäusestutzen und/oder Stutzen am Gehäusedeckel sind, müssen bei der Fertigung von Filtergehäuse und Filtergehäuseteilen äußerst enge Toleranzen eingehalten werden, um sicherzustellen, dass die Achsen jeweiliger Elementaufnahmen der Endkappen mit den Achsen der gehäuseseitigen und/oder deckelseitigen Halteelemente, wie Stutzen, genau fluchten. Fertigungstoleranzen bei der Gehäuseherstellung, namentlich bei Gehäusekonstruktionen in mehrteiliger Bauweise mit mehreren aneinandergesetzten Gehäuseteilen, können zu Fluchtungsfehlern führen, durch die es zu Verspannungen im Filterelement kommt, die Fehlfunktionen oder gar Beschädigung zur Folge haben. Insbesondere Filtervorrichtungen mit langen Filterelementen sind von dieser Problematik betroffen, da hier bereits kleinste Winkelfehler und Positionsabweichungen großen Versatz am gegenüberliegenden Halteelement bedeuten.

Weitere Filtervorrichtungen gehen aus der DE 10 2015 007 692 A1, der WO 02/076570 A1, der WO 2007/003517 A2 und der DE 10 2014 002 241 A1 hervor.

**Im** Hinblick auf diese Problematik stellt sich die Erfindung die Aufgabe, eine Filtervorrichtung der eingangs genannten Gattung zur Verfügung zu stellen, die rationell und kostengünstig herstellbar ist und sich zugleich durch ein sicheres Betriebsverhalten auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass die Lagerung eine konvex verlaufende Lagerfläche aufweist, die in einer konkav verlaufenden Lagerfläche geführt ist, und dass die jeweilige Lagerfläche Bestandteil einer Schale ist, von denen mindestens eine einen Durchlass für Flüssigkeit aufweist.

Unter einer Schale im Sinne der Erfindung und im Sinne der Definition in der technischen Mechanik wird dabei ein flächiges Tragwerk verstanden, das doppelt räumlich gekrümmt ist, und dass insbesondere Belastungen sowohl senkrecht als auch in seiner Ebene aufnehmen kann. Schalen nutzen Ihre Tragfähigkeit durch das Verteilen von Lasten über Membrankräfte, die über die Dicke der Schale konstant sind, optimal aus, so dass die Schalen bei geringem Gewicht eine hohe Steifigkeit aufweisen.

Ein besonderer Vorteil dieser Ausbildung der Lagerung über Schalen besteht darin, dass der Durchlass gegenüber der Rohseite der Filtervorrichtung auf der Außenseite des Filterelements abgedichtet ist.

Es ist ferner vorgesehen, dass mittels einer mehr als einen Freiheitsgrad zur Verfügung stellenden Lagerung das Filterelement über seine eine Endkappe gelenkig an der Elementaufnahme gelagert ist. Dadurch steht eine Ausgleichsmöglichkeit für mögliche Versatzfehler zur Verfügung, so dass eine Reduzierung der engen einzuhaltenden Toleranzgrenzen für die Fertigung ermöglicht ist und somit Filtervorrichtungen auch mit lang bauenden Filterelementen oder mit zusammengesetzten Filtergehäusen betriebssicher und mit günstigen Herstellungskosten fertigbar sind.

Mit Vorteil kann die Anordnung hierbei so getroffen sein, dass die Lagerung mindestens eine konvex verlaufende Lagerfläche aufweist, die in mindestens einer konkav verlaufenden Lagerfläche geführt ist. Dergestalt ist eine sphärische Lagerung ausgebildet, die eine Art Kugelgelenk zwischen der jeweiligen Endkappe und der Elementaufnahme bildet, so dass Fluchtungsfehler verspannungsfrei ausgleichbar sind.

Die jeweils konvex verlaufende Lagerfläche kann Teil der Elementaufnahme sein, wobei die jeweils konkav verlaufende Lagerfläche Teil der einen Endkappe ist. Bei der kugeligen Form der Elementaufnahme ist dadurch das Filterelement mit seiner Lagerfläche einfach auf die Lagerfläche der Elementaufnahme aufschiebbar.

Bei bevorzugten Ausführungsbeispielen sind die beiden in der Art einer Steck- oder Clipverbindung miteinander in Anlage befindlichen Lagerflächen sphärisch ausgebildet. Die miteinander korrespondierenden Wölbungen bilden dadurch eine axiale Sicherung des mit seiner Endkappe auf die Elementaufnahme aufgesteckten Filterelements.

Bei vorteilhaften Ausführungsbeispielen ist die Elementaufnahme im Filtergehäuse vorzugsweise mittels einer Schraubverbindung festgelegt, wobei das Filterelement abschnittsweise mit seiner Längsachse aus der Längsachse der Elementaufnahme heraus in alle Richtungen um einen vorgebbaren Schwenkwinkel mittels der sphärischen Lagerung ausschwenkbar ist.

Bei besonders vorteilhaften Ausführungsbeispielen ist eine Blockiereinrichtung vorgesehen, die den maximal möglichen Ausschwenkwinkel des Filterelements begrenzt, die zwischen der Endkappe des Filterelements und der Elementaufnahme wirkt und durch diese beiden gebildet ist. Die Begrenzung der maximalen Schrägstellung der Einheit aus Filterelement und Elementaufnahme erleichtert die Handhabung beim Einsetzen des Filterelements in das Filtergehäuse.

Mit besonderem Vorteil kann die Anordnung so getroffen sein, dass eine weitere Blockiereinrichtung vorhanden ist, die beim Aufschrauben des Filterelements mit seiner Elementaufnahme auf eine im Inneren des Filtergehäuses angeordnete Gehäuseaufnahme die Schwenkbewegung aus der Grundstellung heraus unterbindet, bei der die Längsachsen von der einen Endkappe und der zugeordneten Elementaufnahme deckungsgleich miteinander sind, und dass bei festgelegter Elementaufnahme an der Gehäuseaufnahme und bei weiterer rotatorischer Drehbewegung der einen Endkappe gegenüber der Elementaufnahme, vorzugsweise in Aufschraubrichtung, die weitere Blockiereinrichtung die Schwenkbewegung aus der Grundstellung heraus freigibt. Mit im wirksamen Zustand befindlicher weiterer Blockiereinrichtung steht somit für den Einbauvorgang des Filterelements in das Filtergehäuse das Filterelement mit Elementaufnahme als starre Einheit mit fluchtenden Achsen zur Verfügung. Dies bildet eine besonders wirksame Montagehilfe beim Montagevorgang, bei dem die Elementaufnahme mit dem Gewinde der im Gehäuseinneren schlecht zugänglichen Gehäuseaufnahme in Eingriff gebracht werden muss. Da die Blockiereinrichtung im Zuge der Aufschraubdrehung des Filterelements deaktiviert wird, ist gleichzeitig sichergestellt, dass mit Abschluss des Einbau-Schraubvorgangs die sphärische Lagerung für den Ausgleich möglicher Fluchtungsfehler wirksam ist.

Bei vorteilhaften Ausführungsbeispielen ist die weitere Endkappe des Filterelements an einer weiteren Gehäuseaufnahme im Inneren des Filtergehäuses festgelegt, wobei die weitere Gehäuseaufnahme vorzugsweise Bestandteil eines Gehäusedeckels ist, der auf einen Filterkopf als Teil des Filtergehäuses, insbesondere mittels mindestens einer Schraubverbindung, festgelegt ist. Die weitere Gehäuseaufnahme kann durch einen Stutzen des Gehäusedeckels gebildet sein, der in eine Öffnung der zugeordneten Endkappe des Filterelements eingreift. Der Stutzen kann einen Verschluss dieser Endkappe oder einen Fluidweg bilden, der vom Filterkopf ins Innere des Filterelements führt.

Mit Vorteil kann die eine Gehäuseaufnahme mindestens ein federbelastetes Bypassventil aufweisen, das in seiner geöffneten Stellung, unter zumindest teilweiser Umgehung des Filterelements, den Fluidweg aus dem Inneren des Filtergehäuses an dessen Auslass freigibt. Der Fluidweg kann über eine von der einen Endkappe gebildete, an der Gehäuseaufnahme abgedichtete Kavität geführt sein, die ein Siebgewebe enthält, das bei geöffnetem Bypassventil durchströmt ist.

Gemäß dem Patentanspruch 10 ist Gegenstand der Erfindung auch ein Filterelement, das insbesondere für eine Filtervorrichtung nach einem der Patentansprüche 1 bis 9 vorgesehen ist.

Nachstehend ist die Erfindung anhand eines in der Zeichnung dargestellten Ausführungsbeispiels im Einzelnen erläutert. Es zeigen:
- Fig. 1: eine mit zentraler, vertikaler Schnittebene aufgeschnittene perspektivische Schrägansicht des Ausführungsbeispiels der erfindungsgemäßen Filtervorrichtung;
- Fig. 2: eine vergrößert gezeichnete, mit zentraler Vertikalebene aufgeschnittene perspektivische Schrägansicht der einen Endkappe und der dieser zugeordneten Elementaufnahme des Filterelements des Ausführungsbeispiels;
- Fig. 3: eine gegenüber Fig. 2 weiter vergrößerte perspektivische Schrägansicht, die den Bereich zweier Blockiereinrichtungen des Ausführungsbeispiels zeigt, die beide in der Blockierstellung dargestellt sind; und
- Fig. 4: eine der Fig. 3 entsprechende Darstellung, wobei von den Blockiereinrichtungen eine in der Freigabestellung dargestellt ist.

Unter Bezug auf die Zeichnungen ist die Erfindung am Beispiel einer sog. In-Tank-Filtervorrichtung erläutert, die ein Filtergehäuse 2 in Form eines am unteren Ende 4 offenen Rohrkörpers aufweist. Die Erfindung ist gleichermaßen vorteilhaft bei einer Filtervorrichtung realisierbar, bei der ein Filtergehäuse in die Form eines bodenseitig geschlossenen Filtertopfes vorgesehen ist. In der Nähe des unteren Endes 4 ist eine Gehäuseaufnahme 6 an der Innenseite des Rohrkörpers des Filtergehäuses 2 festgelegt. Die Gehäuseaufnahme 6 ist durch einen zweiteiligen Ringkörper mit koaxialem innerem Durchgang 8 gebildet. Am Oberteil 10 setzt sich der Durchgang 8 mit einem nach oben vorstehenden Gewindestutzen 12 fort, mit dessen Außengewinde das Innengewinde eines Gewinderinges 26 einer Elementaufnahme 14 für die Lagerung eines Filterelements 15 verschraubbar ist. Über das Innengewinde ist die Elementaufnahme 14 lösbar im Filtergehäuse 2 festlegbar. Im Unterteil 16 der Gehäuseaufnahme 6 sind um die Außenseite des zentralen Durchgangs 8 verteilt angeordnete Ventilkammern 18 für Bypassventile gebildet, die Fluiddurchgänge von einer oberen Kreisringfläche 20 des Oberteils 10 zu Fluiddurchgängen 22 am Unterteil 16 aufweisen. Die Fluiddurchgänge 22 sind durch federbelastete Schließkörper 24 normalerweise geschlossen.

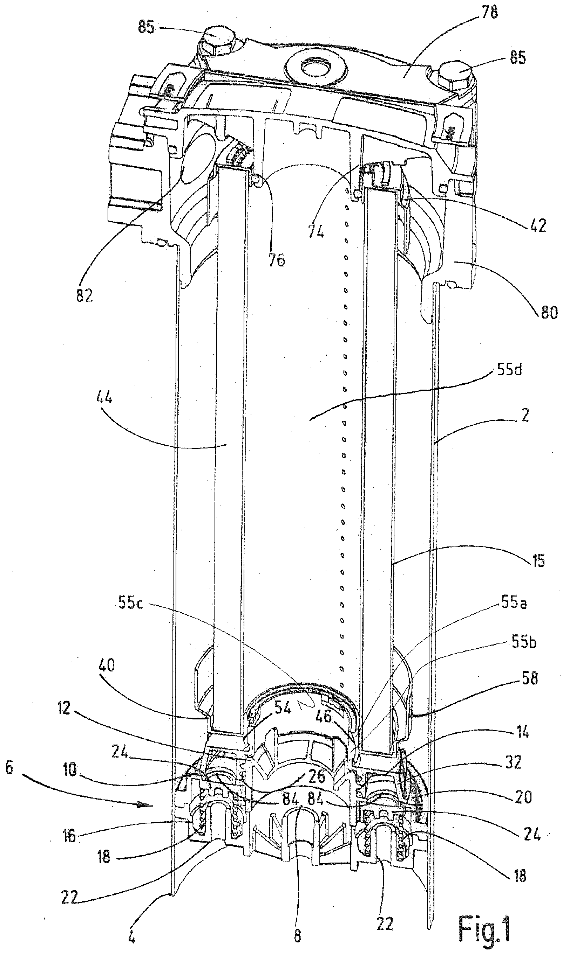

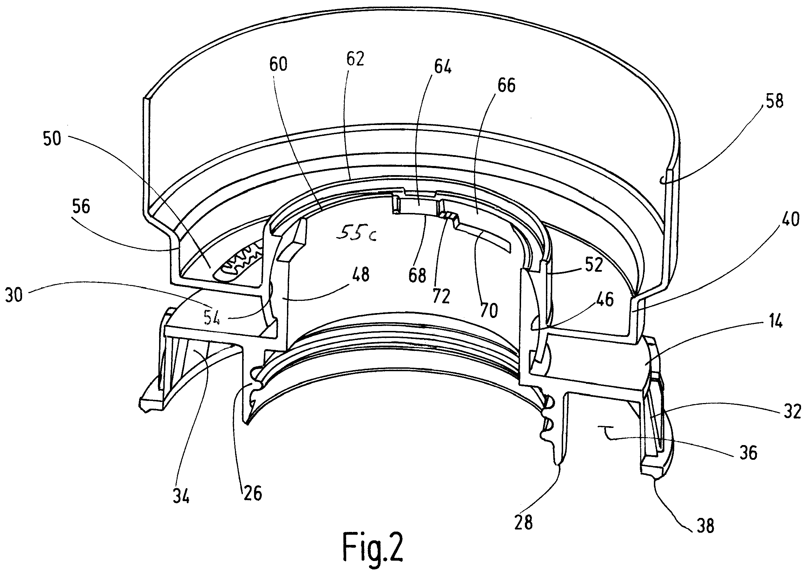

Die Fig. 1 zeigt das Filterelement 15 in der eingebauten Funktionsposition, bei der der von der Elementaufnahme 14 koaxial nach unten vorstehender Gewindering 26 mit dem Gewindestutzen 12 der Gehäuseaufnahme 6 verschraubt ist, wobei bei festgezogener Verschraubung der Gewindering 26 mit seinem Ende 28 (s. Fig. 2) an der Kreisringfläche 20 des Oberteils 10 anliegt. Wie am deutlichsten der Fig. 2 entnehmbar ist, erstreckt sich der Gewindering 26 von der Unterseite einer in einer Radialebene verlaufenden, ebenen, ringförmigen Deckfläche 30 der Elementaufnahme 14, von deren Außenumfang sich ein glockenartiger Mantel 32 in Richtung des Gewinderings 26 erstreckt. Der Mantel 32 weist Wanddurchbrüche 34 auf und begrenzt zwischen sich und dem Gewindering 26 einen Ringraum 36. Bei der verschraubten, in Fig. 1 gezeigten Funktionsposition steht der Mantel 32 mit seinem unteren Ringrand 38, ebenso wie das Ende 28 des Gewinderings 26, an der Kreisringfläche 20 des Oberteils 10 der Gehäuseaufnahme 6 an.

Das Filterelement 15 weist in üblicher Weise ein zwischen Endkappen 40 und 42 verlaufendes Elementmaterial 44 in Form eines Hohlzylinders auf. Von den Endkappen 40, 42 ist die eine, in Fig. 1 untenliegende Endkappe 40 an der Elementaufnahme 14 gelagert. Zur Bildung der Lagerung weist die Elementaufnahme 14, s. Fig. 2 bis 4, von der Deckfläche 30 ausgehend, einen koaxial nach oben vorstehenden Rohrkörper 48 auf, dessen radial außenliegende Wand eine Lagerfläche 46 in Form einer konvex gewölbten Ringfläche bildet. Die Endkappe 40 weist, ausgehend vom radial inneren Rand einer ebenen Anlagefläche 50 für das stirnseitige Ende des Elementmaterials 44 einen nach oben und nach unten vorstehenden Rohrkörper 52 auf, dessen radial innenliegende Wand die zweite Lagerfläche 54 in Form einer konkav gewölbten Ringfläche bildet.

Die Figuren, siehe insbesondere Fig. 2, zeigen den Lagerungszustand, bei dem die Endkappe 40 mit ihrem Rohrkörper 52 auf den Rohrkörper 48 der Elementaufnahme 14 aufgesteckt ist, wobei die Lagerung mit den aneinanderliegenden Lagerflächen 46, 54 aufgrund elastischer Nachgiebigkeit insbesondere des auf der Deckfläche 30 freistehenden Rohrkörpers 48 verclipst ist. Durch die Anlage der konvexen Lagerfläche 46 an der konkaven Lagerfläche 54 ist eine sphärische Lagerung in der Art eines Kugelgelenks zwischen Endkappe 40 und Elementaufnahme 14 gebildet. Die jeweilige Lagerfläche 46, 54 ist Bestandteil einer membranartigen Schale 55a, 55b, von denen mindestens eine 55b einen Durchlass 55c für Flüssigkeit aufweist, der mit einem Hohlraum 55d im Filterelement fluidführend verbunden ist. Die Einfassung für das auf der Anlagefläche 50 der Endkappe 40 anstehende Elementmaterial 44 ist radial innen durch den Rohrkörper 52 und radial außen durch eine Mantelfläche 56 gebildet, die sich nach oben hin in Radialrichtung zu einer Schale 58 erweitert, die den Endabschnitt des Elementmaterials 44 in einem radialen Abstand umgibt.

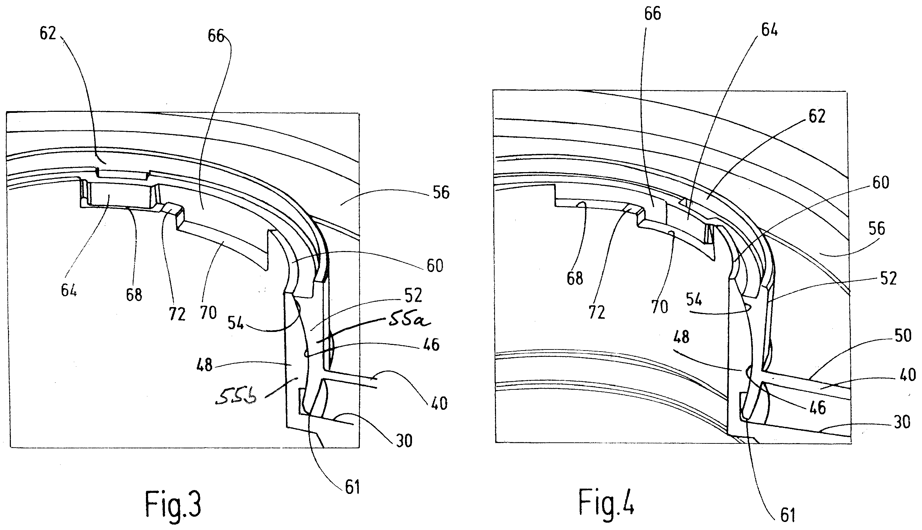

Die gebildete sphärische Lagerung erlaubt eine Auslenkung der Längsachsen von Elementaufnahme 14 relativ zum Filterelement 15 aus der fluchtenden Grundstellung heraus, wie sie in Fig. 1 und 2 gezeigt ist. Bei dieser fluchtenden Stellung befindet sich der untere Rand 61 des Rohrkörpers 52 der Endkappe 40 in einem Abstand von der Deckfläche 30 der Elementaufnahme 14. Die Fig. 3 und 4 zeigen demgegenüber einen ausgelenkten Zustand, genauer gesagt, die maximal mögliche Auslenkung, bei der der untere Rand 60 des Ringkörpers 52 an der einen Anschlag bildenden Deckfläche 30 der Elementaufnahme 14 anliegt. Dadurch ist eine die maximale Auslenkung begrenzende Blockiereinrichtung gebildet.

Die Fig. 2 bis 4 zeigen nähere Einzelheiten einer weiteren Blockiereinrichtung, die durch Ausgestaltungen am oberen Endrand 60 des Rohrkörpers 48 der Elementaufnahme 14 und des oberen Endrandes 62 des Rohrkörpers 52 der Endkappe 40 gebildet ist. Wie gezeigt, weist diese Blockiereinrichtung einen Sperrblock 64 auf, der in Form einer rechteckförmigen kurzen Rippe an der Innenseite des Endrandes 62 des Rohrkörpers 52 radial nach innen vorsteht. An dem anderen, innenliegenden Rohrkörper 48 ist am Endrand 60 eine Aussparung 66 gebildet, die sich in Stufen 68 und 70 (siehe insbesondere Fig. 3 und 4) über jeweils einen Umfangsabschnitt des Rohrkörpers 48 erstreckt. Mit der ersten Stufe 68 bildet die Aussparung 66 eine axiale Vertiefung des Endrandes 62, die der axialen Dicke des Sperrblockes 64 entspricht und ist in Umfangsrichtung durch einen aus der Stufenfläche geringfügig vorstehenden Vorsprung 72 auf eine Umfangslänge begrenzt, die nur geringfügig größer ist als die in Umfangsrichtung gemessene Länge des Sperrblockes 64, siehe Fig. 3. An die erste Stufe 68 schließt sich anschließend an den Vorsprung 72 die zweite Stufe 70 an, mit der der Endrand 62 in Axialrichtung weiter vertieft ist und die eine größere Umfangslänge besitzt als die erste Stufe 68.

Bei dieser Anordnung ist die Funktion dieser weiteren Blockiereinrichtung wie folgt: Die Fig. 2 und 3 zeigen die Grundstellung, bei der die Achse von Filterelement 15 mit Endkappe 40 in Fluchtung mit der Längsachse der Elementaufnahme 14 ist. Der Sperrkörper 64 der Endkappe 40 befindet sich in der ersten Stufe 68 der Ausspannung 66 des Rohrkörpers 48 der Elementaufnahme 14. Da die axiale Erstreckung der ersten Stufe 68 der in Axialrichtung gemessenen Dicke des Sperrblockes 64 entspricht, ist die sphärische Lagerung gegen Auslenkung blockiert. Gleichzeitig behindert der Vorsprung 72 die Verschiebebewegung des Sperrblockes 64 in Umfangsrichtung, so dass bei dieser Grundstellung eine Drehverrastung zwischen Filterelement 15 und Elementaufnahme 14 gebildet ist. In der Grundstellung ist daher beim Montagevorgang für den Einbau des Filterelements 15 in das Filtergehäuse 2 das Filterelement 15 mit der mit ihm eine starre Einheit bildenden Elementaufnahme 14 bequem und sicher an den Gewindering 26 der Gehäuseaufnahme 6 ansetzbar und mit der gebildeten Drehverrastung festschraubbar. Bei gebildeter Verschraubung ist durch Weiterdrehen die durch den Vorsprung 72 gebildete Drehverrastung überwindbar, so dass der Sperrblock 64 den Vorsprung 72 überläuft und in den durch die zweite Stufe 70 der Aussparung 66 gebildeten Freiraum gelangt. Aufgrund der größeren axialen Tiefe der Stufe 70 ist der Sperrblock 64 nicht mehr axial abgestützt, so dass die sphärische Lagerung freigeben und in den durch die erste Blockiereinrichtung gebildeten Grenzen für den Ausgleich von Fluchtungsfehlern auslenkbar ist.

Die andere, obere Endkappe 42 ist beim gezeigten Ausführungsbeispiel, siehe Fig. 1, mit einer Elementaufnahme in Eingriff, die durch einen Stutzen 74 gebildet ist, der mit der zentralen Öffnung 76 der Endkappe 42 in Eingriff ist. Anstelle dieses formschlüssigen Eingriffes könnte auch zwischen oberer Endkappe 42 und betreffender Elementaufnahme eine sphärische Lagerung der an der unteren Endkappe 40 gezeigten Art vorgesehen sein. Der beim gezeigten Beispiel vorgesehene Stutzen 74 ist Bestandteil eines Gehäusedeckels 78, der durch Schraubverbindungen 85 abnehmbar an einem Filterkopf 80 befestigt ist, der einen Unfiltrateingang 82 aufweist und, wie bei In-Tank-Filtervorrichtungen üblich, an einer Öffnung in einer nicht gezeigten Tankwand angebracht ist. Bei der in Fig. 1 gezeigten Funktionsposition sind das Ende 28 des Gewinderinges 26 und der Endrand 38 der Elementaufnahme 14 in dichter Anlage an der Kreisringfläche 20 der Gehäuseaufnahme 6. Für den Zugang von Unfiltrat zu den Bypassventilen im Unterteil 16 der Gehäuseaufnahme 6 bildet der innerhalb des Mantels 32 befindliche Ringraum 36 einen Einströmraum, in den Unfiltrat über die Wanddurchbrüche 34 gelangt. In der Kreisringfläche 20, die den Boden dieses Ringraumes 36 bildet, sind Öffnungen 84 vorgesehen, die vom Schließkörper 24 des jeweiligen Bypassventils normalerweise geschlossen sind. An den Wanddurchbrüchen 34 des Mantels 32 können eingespritzte Siebgitter vorgesehen sein, die bei druckbetätigter Öffnung eines Bypassventils eine Filtrierung des Unfiltratstroms bewirken. Bei einer nicht dargestellten Ausführungsform besteht auch die Möglichkeit die vorgestellte sphärische Lagerung vom unteren an das obere Elementende zu verlegen, oder an beiden Elementenden eine solche Lagerung vorzusehen.

## Patentansprüche

1. Filtervorrichtung mit einem Filtergehäuse (2) und einem darin aufgenommenen Filterelement (15), dessen Elementmaterial (44) sich zur Filtrierung einer Flüssigkeit zwischen zwei Endkappen (40, 42) erstreckt, von denen zumindest eine Endkappe (40) an einer Elementaufnahme (14) gelagert ist, wobei mittels einer mehr als einen Freiheitsgrad zur Verfügung stellenden Lagerung (46, 54) das Filterelement (15) über seine eine Endkappe (40) gelenkig an der Elementaufnahme (14) gelagert ist, **dadurch gekennzeichnet, dass** die Lagerung eine konvex verlaufende Lagerfläche (46) aufweist, die in einer konkav verlaufenden Lagerfläche (54) geführt ist, und dass die jeweilige Lagerfläche (46, 54) Bestandteil einer Schale (55a, 55b) ist, von denen mindestens eine (55b) einen Durchlass (55c) für Flüssigkeit aufweist.

2. Filtervorrichtung nach Anspruch 1, **dadurch gekennzeichnet, dass** die jeweils konvex verlaufende Lagerfläche (46) Teil der Elementaufnahme (14) ist und die jeweils konkav verlaufende Lagerfläche (54) Teil der einen Endkappe (40) ist.

3. Filtervorrichtung nach Anspruch 1 oder 2, **dadurch gekennzeichnet, dass** die beiden in der Art einer Steck- oder Clipverbindung miteinander in Anlage befindlichen Lagerflächen (46, 54) sphärisch ausgebildet sind.

4. Filtervorrichtung nach einem der vorstehenden Ansprüche, **dadurch gekennzeichnet, dass** die Elementaufnahme (14) im Filtergehäuse (2) vorzugsweise mittels einer Schraubverbindung (12, 26) festgelegt ist.

5. Filtervorrichtung nach Anspruch 3 oder 4, **dadurch gekennzeichnet, dass** das Filterelement (15) abschnittsweise mit seiner Längsachse aus der Längsachse der Elementaufnahme (14) heraus in alle Richtungen um einen vorgebbaren Schwenkwinkel mittels der sphärischen Lagerung (46, 54) ausschwenkbar ist.

6. Filtervorrichtung nach einem der vorstehenden Ansprüche, **dadurch gekennzeichnet, dass** eine Blockiereinrichtung (30, 61) vorgesehen ist, die den maximal möglichen Auslenkwinkel des Filterelements (15) begrenzt, die zwischen der Endkappe (40) des Filterelements (15) und der Elementaufnahme (14) wirkt und durch diese beiden gebildet ist.

7. Filtervorrichtung nach einem der vorstehenden Ansprüche, **dadurch gekennzeichnet, dass** eine weitere Blockiereinrichtung (64, 66, 68, 70) vorhanden ist, die beim Aufschrauben des Filterelements (15) mit seiner Elementaufnahme (14) auf eine im Innern des Filtergehäuses (2) angeordnete Gehäuseaufnahme (6) die Schwenkbewegung aus einer Grundstellung heraus unterbindet, bei der die Längsachsen von der einen Endkappe (40) und der zugeordneten Elementaufnahme (14) deckungsgleich miteinander sind, und dass bei festgelegter Elementaufnahme (14) an der Gehäuseaufnahme (6) und bei weiterer rotatorischer Drehbewegung der einen Endkappe (40) gegenüber der Elementaufnahme (14), vorzugsweise in Aufschraubrichtung, die weitere Blockiereinrichtung (64, 66, 68, 70) die Schwenkbewegung aus der Grundstellung heraus freigibt.

8. Filtervorrichtung nach einem der vorstehenden Ansprüche, **dadurch gekennzeichnet, dass** die weitere Endkappe (42) des Filterelements (15) an einer weiteren Gehäuseaufnahme (74) im Inneren des Filtergehäuses (2) festgelegt ist und dass die weitere Gehäuseaufnahme (74) vorzugsweise Bestandteil eines Gehäusedeckels (78) ist, der auf einem Filterkopf (80) als Teil des Filtergehäuses (2), insbesondere mittels mindestens einer Schraubverbindung (84), festgelegt ist.

9. Filtervorrichtung nach einem der vorstehenden Ansprüche, **dadurch gekennzeichnet, dass** die eine Gehäuseaufnahme (6) mindestens ein federbelastetes Bypassventil (24) aufweist, das in seiner geöffneten Stellung, unter zumindest teilweiser Umgehung des Filterelements (15), den Fluidweg aus dem Inneren des Filtergehäuses (2) an dessen Auslass (4) freigibt.

10. Filterelement (15), dessen Elementmaterial (44) sich zur Filtrierung einer Flüssigkeit zwischen zwei Endkappen (40, 42) erstreckt, von denen zumindest eine Endkappe (40) an einer Elementaufnahme (14) gelagert ist, wobei mittels einer mehr als einen Freiheitsgrad zur Verfügung stellenden Lagerung (46, 54) das Filterelement (15) über seine eine Endkappe (40) gelenkig an der Elementaufnahme (14) gelagert ist, **dadurch gekennzeichnet, dass** die Lagerung eine konvex verlaufende Lagerfläche (46) aufweist, die in einer konkav verlaufenden Lagerfläche (54) geführt ist, und dass die jeweilige Lagerfläche (46, 54) Bestandteil einer Schale (55a, 55b) ist, von denen mindestens eine (55b) einen Durchlass (55c) für Flüssigkeit aufweist.

## Claims

1. Filter device comprising a filter housing (2) and a filter element (15) received therein, the element material (44) of which extends between two end caps (40, 42) for the purpose of filtering a liquid, at least one end cap (40) thereof being mounted on an element seat (14), the filter element (15) being hingedly mounted on the element seat (14) via one of its end caps (40) by means of a bearing (46, 54) that provides more than one degree of freedom, **characterised in that** the bearing has a convexly extending bearing surface (46) guided in a concavely extending bearing surface (54), and **in that** each bearing surface (46, 54) is a component part of a shell (55a, 55b), at least one (55b) of which has a passage (55c) for liquid.

2. Filter device according to claim 1, **characterised in that** each convexly extending bearing surface (46) is part of the element seat (14), and each concavely extending bearing surface (54) is part of one end cap (40).

3. Filter device according to claim 1 or claim 2, **characterised in that** the two bearing surfaces (46, 54) abutting each other in the manner of a plugged or clipped connection are configured to be spherical.

4. Filter device according to any of the preceding claims, **characterised in that** the element seat (14) is secured in the filter housing (2) preferably by means of a screw connection (12, 26).

5. Filter device according to claim 3 or claim 4, **characterised in that**, in some portions, the filter element (15) can pivot by its longitudinal axis out of the longitudinal axis of the element seat (14) in all directions about a predeterminable pivot angle, by means of the spherical bearing (46, 54).

6. Filter device according to any of the preceding claims, **characterised in that** a blocking apparatus (30, 61) is provided which limits the maximum possible deflection angle of the filter element (15) and acts between and is formed by the end cap (40) of the filter element (15) and the element seat (14).

7. Filter device according to any of the preceding claims, **characterised in that** a further blocking apparatus (64, 66, 68, 70) is present which, when the filter element (15) is screwed by its element seat (14) onto a housing seat (6) arranged in the interior of the filter housing (2), prevents the pivot movement out of an initial position, in which the longitudinal axes of one end cap (40) and the associated element seat (14) coincide with one another, and **in that**, when the element seat (14) is secured to the housing seat (6) and one end cap (40) rotationally moves further relative to the element seat (14), preferably in the screw-on direction, the further blocking apparatus (64, 66, 68, 70) releases the pivot movement out of the initial position.

8. Filter device according to any of the preceding claims, **characterised in that** the further end cap (42) of the filter element (15) is secured to a further housing seat (74) in the interior of the filter housing (2), and **in that** the further housing seat (74) is preferably a component part of a housing lid (78) that is secured on a filter head (80) as part of the filter housing (2), in particular by means of at least one screw connection (84).

9. Filter device according to any of the preceding claims, **characterised in that** one housing seat (6) has at least one spring-loaded bypass valve (24) which, when in its open position, releases the fluid path from the interior of the filter housing (2) to the outlet (4) thereof, at least partly bypassing the filter element (15).

10. Filter element (15), the element material (44) of which extends between two end caps (40, 42) for the purpose of filtering a liquid, at least one end cap (40) thereof being mounted on an element seat (14), the filter element (15) being hingedly mounted on the element seat (14) via one of its end caps (40) by means of a bearing (46, 54) that provides more than one degree of freedom, **characterised in that** the bearing has a convexly extending bearing surface (46) guided in a concavely extending bearing surface (54), and **in that** each bearing surface (46, 54) is a component part of a shell (55a, 55b), at least one (55b) of which has a passage (55c) for liquid.

## Revendications

1. Dispositif de filtration comprenant une enveloppe (2) de filtre et un élément (15) de filtre, qui y est reçu, dont la matière (44) d'élément s'étend pour la filtration d'un liquide, entre deux coiffes (40, 42) d'extrémité, dont au moins une coiffe (40) d'extrémité est montée sur un logement (14) d'élément, dans lequel, au moyen d'un montage (46, 54) mettant à disposition plus d'un degré de liberté, l'élément (15) de filtre est, par sa une coiffe (40) d'extrémité, articulé au logement (14) d'élément, **caractérisé en ce que** le montage a une surface (46) de palier s'étendant de manière convexe, qui est guidée dans une surface (54) de palier s'étendant de manière concave, et **en ce que** la surface (46, 54) respective de palier est une partie constitutive d'une coque (55a, 55b), dont l'une (55b) au moins a une traversée (55c) pour du liquide.

2. Dispositif de filtration suivant la revendication 1, **caractérisé en ce que** la surface (46) de palier s'étendant de manière convexe fait partie du logement (14) d'élément et la surface (54) de palier s'étendant de manière convexe fait partie de la une coiffe (40) d'extrémité.

3. Dispositif de filtration suivant la revendication 1 ou 2, **caractérisé en ce que** les deux surfaces (46, 54) de palier, se trouvant en contact l'une avec l'autre à la manière d'une liaison par enfichage ou par clipsage, sont de constitution sphérique.

4. Dispositif de filtration suivant l'une des revendications précédentes, **caractérisé en ce que** le logement (14) d'élément est fixé dans l'enveloppe (2) de filtre, de préférence au moyen d'un vissage (12, 26).

5. Dispositif de filtration suivant la revendication 3 ou 4, **caractérisé en ce que** l'élément (15) de filtre peut, par endroits, par son axe longitudinal sortant de l'axe longitudinal du logement (14) d'élément, pivoter au moyen du montage (46, 54) sphérique dans toutes les directions d'un angle de pivotement pouvant être donné à l'avance.

6. Dispositif de filtration suivant l'une des revendications précédentes, **caractérisé en ce qu'**il est prévu un dispositif (30, 61) de blocage, qui limite l'angle de déviation possible au maximum de l'élément (15) de filtre, le dispositif agissant entre la coiffe (40) d'extrémité de l'élément (15) de filtre et le logement (14) d'élément et étant formé par les deux.

7. Dispositif de filtration suivant l'une des revendications précédentes, **caractérisé en ce qu'**il y a un autre dispositif (64, 66, 68, 70) de blocage, qui, lors du vissage de l'élément (15) de filtre par son logement (14) d'élément sur un logement (6) d'enveloppe monté à l'intérieur de l'enveloppe (2) de filtre, supprime le mouvement de pivotement hors d'une position de base, dans laquelle les axes longitudinaux de la une coiffe (40) d'extrémité et du logement (14) d'élément associé sont l'un avec l'autre en coïncidence, et **en ce que**, lorsque le logement (14) de l'élément est fixé au logement (6) de l'enveloppe et lorsque l'on continue à faire tourner en rotation la une coiffe (40) d'extrémité par rapport au logement (14) de l'élément, de préférence dans le sens de vissage, l'autre dispositif (64, 66, 68, 70) de blocage autorise le mouvement de pivotement en dehors de la position de base.

8. Dispositif de filtration suivant l'une des revendications précédentes, **caractérisé en ce que** l'autre coiffe (42) d'extrémité de l'élément (15) de filtre est fixée à un autre logement (74) d'enveloppe à l'intérieur de l'enveloppe (2) du filtre et **en ce que** l'autre logement (74) d'enveloppe est, de préférence, une partie constitutive d'un couvercle (78) d'enveloppe, qui est fixé sur une tête (80) de filtre comme partie de l'enveloppe (2) de filtre, en particulier au moyen d'au moins un vissage (84).

9. Dispositif de filtration suivant l'une des revendications précédentes, **caractérisé en ce que** le un logement (6) de l'enveloppe a au moins une soupape (24) de dérivation soumise à l'action d'un ressort, qui, dans sa position ouverte, en contournant au moins en partie l'élément (15) de filtre, libère le chemin de fluide de l'intérieur de l'enveloppe (2) du filtre à sa sortie (4).

10. Elément (15) de filtre, dont la matière (44) d'élément s'étend, pour la filtration d'un liquide, entre deux coiffes (40, 42) d'extrémité, dont au moins une coiffe (40) d'extrémité est montée sur un logement (14) d'élément, dans lequel, au moyen d'un montage (46, 54) mettant à disposition plus d'un degré de liberté, l'élément (15) de filtre est, par sa une coiffe (40) d'extrémité, articulé au logement (14) d'élément, **caractérisé en ce que** le montage a une surface (46) de palier s'étendant de manière convexe, qui est guidée dans une surface (54) de palier s'étendant de manière concave, et **en ce que** la surface (46, 54) respective de palier est une partie constitutive d'une coque (55a, 55b), dont l'une (55b) au moins a une traversée (55c) pour du liquide.
